Europäisches Patentamt

(19) European Patent Office

Office européen des brevets

(11) Publication number: **0 008 319**
A2

(12) **EUROPEAN PATENT APPLICATION**

(21) Application number: 79101278.4

(22) Date of filing: 27.04.79

(51) Int. Cl.³: **C 08 F 291/04**
C 08 F 2/06, C 08 F 4/52
//C08F279/02

(30) Priority: 25.08.78 US 936655

(43) Date of publication of application:
05.03.80 Bulletin 80/5

(84) Designated Contracting States:
BE DE FR GB IT

(71) Applicant: THE FIRESTONE TIRE & RUBBER COMPANY
1200 Firestone Parkway
Akron, Ohio 44317(US)

(72) Inventor: Ambrose, Richard Joseph
3202 Bancroft Road
Akron, Ohio 44313(US)

(74) Representative: Kraus, Walter, Dr. et al,
Patentanwält Dres. Kraus & Weisert Irmgardstrasse 15
D-8000 München 71(DE)

(54) Preparation of thermoplastic elastomers by cationic grafting.

(57) Thermoplastic elastomers having improved high service temperatures and increased tensile strength are prepared by grafting cationic polymerizable monomer to halogenated backbone, said grafting being effected in the presence of inert organic solent and methyl aluminum sesquichloride as catalyst whereby improved polymerization rate and increased monomer conversion result.

EP 0 008 319 A2

- 1 -

# THERMOPLASTIC ELASTOMERS PREPARED
## BY CATIONIC GRAFTING

## PRIOR ART

The prior art, as represented for example, by U.S. Patent Nos. 3,904,708 and 3,933,942, specifically teaches the use of solvent, cationically polymerizable monomer, the use of alkyl aluminum as coinitiator and the grafting onto halogenated backbone.

U.S. Patent No. 3,669,947 is directed to the homopolymerization of alpha-methyl styrene in an inert organic solvent such as toluene, in a free radical system wherein water and Friedel-Crafts halide act as co-catalyst to shorten the polymerization time. This is a distinctly different initiator system from that herein claimed and does not require, for example, the presence of backbone polymer with labile halide.

U.S. Patent No. 3,494,983 is directed to an interpolymerization system involving diolefin polymer and at least two olefin monomers; dialkyl aluminum catalyst is utilized and toluene as solvent medium with or without water; a heavy metal compound functions as co-catalyst and the product is sulfur curable. In contrast to this disclosure, applicant's process is one of cationic grafting from halogenated backbone with, for example, alpha-methylstyrene, methyl aluminum sesquichloride being utilized as catalyst in inert organic solvent to achieve improved polymerization rate and higher monomer conversion.

U.S. Patent No. 4,070,420 is directed to the preparation of thermoplastic elastomers by grafting cationic polymerizable monomer, such as alpha-methylstyrene, to halogenated backbone, such as chlorinated polybutadiene, the grafting being effected in the presence of inert organic solvent, alkyl aluminum catalyst, such as trimethyl aluminum, together with a controlled amount of water.

BACKGROUND OF THE INVENTION

Thermoplastic elastomers have been prepared by connecting glassy segments with rubbery segments in the form of block or graft copolymers. Graft copolymers having the proper structure for good thermoplastic elastomer properties can be prepared according to cationic grafting "from" polymerization techniques.

While the cationic graft polymerization prior art teaches the use of inert solvent, cationic polymerizable monomer, halogenated backbone and selected alkyl aluminum catalysts, such as trimethyl aluminum in the presence of controlled amounts of water, said art would not and does not suggest the use of and/or unexpected results achieved with my methyl aluminum sesquichloride catalyst system. In fact, the prior art would lead one away from my invention as herein described and claimed.

THE INVENTION

My invention is directed to the grafting of cationic polymerizable monomer from halogenated backbone in the presence of inert organic solvent, the improvement being in the use of and results achieved with methyl aluminum sesquichloride as catalyst (coinitiator).

A significant advantage of the thermoplastic elastomers produced in the practice of my invention includes the preparation of such elastomers which unexpectedly reflect increased high service temperatures of to about, for example, 90°C. Prior to the present invention, high service temperatures had only been achieved, to the best of my knowledge, by the method of my U.S. Patent 4,070,420 which utilizes, for example, trimethyl aluminum catalyst with a controlled amount of water. Improved tensile strength properties are also achieved and these two properties have significance in the manufacture of, for example, shoe soles and tennis shoes which would normally soften and lose shape on washing and drying of same in normal laundry facilities.

I have also discovered that the use of methyl aluminum sesquichloride as catalyst not only improved the cationic grafting rate, but also significantly increased the amount of monomer ultimately converted. In carrying out my process, a high grafting efficiency is achieved; this was unexpected in view of the prior art teachings found in, for example, U.S. Patent 3,904,708; the substance of this patent is incorporated by reference. These teachings would lead one away from my use of and unexpected results achieved with methyl aluminum sesquichloride.

DETAILED DESCRIPTION OF THE INVENTION

In the practice of my invention, chlorinated polybutadiene (0.25-1.5% Cl), for example, is dissolved in toluene.

. Solids vary from 3-12 percent by weight. The prescribed amount of monomer(s), such as alphamethyl styrene, is then added and the solution is cooled to -35°C to -50°C. At this time, the co-catalyst methyl aluminum sesquichloride is added at a concentration of $1-2 \times 10^{-2}$ M. The reaction proceeds immediately as observed by an exotherm of 3°-20°C depending on monomer concentration. Reaction time allowed was sometimes up to 1 hour, however, in most cases the reaction was complete in 5-10 minutes. Quenching with sodium methoxide was used as a means to terminate the reaction. The polybutadiene-g-alpha-methyl styrene copolymer was recovered by precipitation with methanol. Compositions containing, for example, from 20-70 percent alpha-methyl styrene have been prepared; however, those containing from 30-50 percent by weight are most desirable for good elastomeric properties. This unique procedure results in monomer conversion of 70-100 percent after 10 minutes reaction time.

Tensile properties of these graft copolymers at room temperature showed ultimate elongations from 300 to 1000 percent and tensile strengths from 3000 - 5500 psi.

Hot properties at 80°C showed ultimate elongations from 200-800 percent and tensile strengths from 800-1800 psi. These hot properties are compared to the commercially available Kratons which have ultimate elongations of 400-800 percent and tensile strengths from 100-300 psi at 80°C.

When the above procedure is repeated with use of, for example, methyl aluminum dichloride, grafting does not result, gel and homopolymer are produced. A reaction time of up to two (2) hours failed to result in graft polymer formation.

The following Example is representative, all parts are by weight percent unless otherwise designated.

## EXAMPLE

A. 45 g. of chlorinated polybutadiene (1.18 percent by weight chlorine) was dissolved in 1200 cc of dry toluene. To this was added 25 cc of alphamethyl styrene monomer (22.5 g) and the solution was cooled to -50°C. At this time, 5.2 cc of .75M methyl aluminum sesquichloride was added and an exotherm from -50° to -45°C was observed almost immediately. The reaction was allowed to proceed for 1 minute at which time 2 ml. of 10% NaOMe in methanol was added to terminate the reaction. Monomer conversion varied from 75 to 100% as judged by both polymer recovery and copolymer composition.

B. When the above reaction was repeated using 1.29 M Me$_3$Al and dry toluene, no exotherm was observed. Monomer conversion was 9 percent as measured by copolymer composition. Attempts were made to increase this conversion by allowing the reaction to proceed for longer reaction times (2-3 hours); no appreciable change in monomer conversion was seen.

Tensile properties of the copolymer prepared in (A) above are as follows:

| Test Temp.°C | alpha-methyl styrene content, Wt. % | Elong-ation% % | Modulus (psi) | | |
|---|---|---|---|---|---|
| | | | 100 | 300 | break |
| 23° | 46 | 425 | 560 | 1215 | 2225 |
| 100° | 46 | 640 | 215 | 255 | 410 |

The tensile properties of the copolymer prepared in the dry toluene, Example (B), could not be determined. The polymer was too weak to test.

The preceding Example can be varied within the context of my total specification disclosure as it would be construed by one skilled in the art; variable conditions and equivalent reactants and components can be substituted in this Example to achieve substantially the same results with only a minimum of routine experimentation.

It is understood that my methyl aluminum sesquichloride coinitiator functions as a co-catalyst with the selected halogenated backbone. The particular monomer and halogenated backbone combination selected is not critical, nor is the solvent; each can be anyone of those designated, for example, in U.S. Patent 3,904,708 which is incorporated by reference.

My invention represents, in essence, a technical and significant process and product improvement of this basic cationic polymerization technology. Each of the preceding known components can be utilized singly or as mixtures in the practice of my invention.

In the practice of my invention, the following represent practical and preferred ranges which can be utilized.

My methyl aluminum sesquichloride, $(CH_3)_3Al_2Cl_3$, coinitiator is preferably used at a concentration of 0.2 to 0.6 x $10^{-2}$ M; an operable range is from about 0.05 to about 5.0 x $10^{-2}$ M.

Although the use of atmospheric pressure is preferred, pressures up to about 3 atmospheres and those under vacuum can be used. The halogenated polymeric backbone preferably contains 0.75 to 1.5% by weight halogen; said backbone can, however, contain from about 0.1 to about 5% by weight halogen. The halogenated backbone of (3) is preferably present at a concentration of 0.0025 to 0.05 gram per cc; an operable concentration range would be from about 0.01 to about 1.0 gram per cc; an acceptable viscosity must be maintained. The temperature of reaction can range from about -90°C to about 70°C; the preferred range is from -55°C to -45°C. The cationically polymerizable monomer can be utilized in an amount of from about 0.05 to about 2.0 molar; a preferred range is from 0.2 to 0.3 molar. The monomer grafted onto the final copolymer would be from 1 to 99 weight percent; 25 to 50 weight percent is preferred. The inert organic solvent can be, for example, toluene, xylene, or mesitylene; the use of toluene is preferred; the solvent can be used in a range of from about 50 to about 99 weight percent; 0 to 95% by weight solvent is preferred.

The thermoplastic elastomers produced in the practice of my invention can be advantageously utilized in the manufacture of elastomeric products that are subjected to high service temperature conditons and/or high tensile stresses. Representative products that can be prepared with my thermoplastic elastomer include, for example, shoe soles, tennis shoes, radiator hose, vibration dampners and hot melt adhesive formulations.

CLAIMS:

1. In the process of grafting cationic polymerizable monomer from halogenated backbone in the presence of organic solvent, the improvement wherein said grafting is effected in the presence of from about .05 to about $5.0 \times 10^{-2}$M methyl aluminum sesquichloride as coinitiator.

2. The process of claim 1 wherein from about 0.2 to about $0.6 \times 10^{-2}$M methyl aluminum sesqui-chloride is utilized.

3. In the process of grafting the cationic polymerizable monomer alpha methyl styrene from halogenated polybutadiene in the presence of toluene as solvent, the improvement wherein said grafting is effected in the presence of from about .05 to about $5.0 \times 10^{-2}$M methyl aluminum sesquichloride as coinitiator.

4. The process of claim 3 wherein from about 0.2 to about $0.6 \times 10^{-2}$M methyl aluminum sesquichlo-ride is utilized.